Europäisches Patentamt

European Patent Office

Office européen des brevets

(11) Publication number: **0 400 752**
**A1**

# EUROPEAN PATENT APPLICATION

(21) Application number: 90201366.3

(51) Int. Cl.5: **H04N 7/01**

(22) Date of filing: 29.05.90

(30) Priority: 02.06.89 NL 8901399

(43) Date of publication of application:
05.12.90 Bulletin 90/49

(84) Designated Contracting States:
DE FR GB IT

(71) Applicant: **N.V. Philips' Gloeilampenfabrieken**
**Groenewoudseweg 1**
**NL-5621 BA Eindhoven(NL)**

(72) Inventor: **de Haan, Gerard**
**c/o INT. OCTROOIBUREAU B.V., Prof.**
**Holstlaan 6**
**NL-5656 AA Eindhoven(NL)**

(74) Representative: **Kooiman, Josephus Johannes**
**Antonius et al**
**INTERNATIONAAL OCTROOIBUREAU B.V.**
**Prof. Holstlaan 6**
**NL-5656 AA Eindhoven(NL)**

(54) Method of and arrangement for reducing the number of lines of a picture signal, as well as an arrangement for increasing the number of lines of a picture signal.

(57) In a method of obtaining from an input signal assembled from input lines and having a first number of lines, an output picture signal which is assembled field-sequentially from output lines and has a lower number of lines than the first number of lines, centres of gravity of a weighted averaging for obtaining first samples (1, 3) of pairs of neighboring samples on the output lines of odd fields are located at 1/4 of first odd input lines (L1o) and at 3/4 of second odd input lines (L2o), centres of gravity of a weighted averaging for obtaining second samples (1, 3) of pairs of neighbouring samples on the output lines of odd fields are located at 1/4 of the second odd input lines (L2o) and at 3/4 of third odd input lines (L3o), centres of gravity of a weighted averaging for obtaining first samples (2, 4) of pairs of adjacent samples on the output lines of even fields are located at 3/4 of first even input lines (L1e) and at 1/4 of second even input lines (L2e), and centres of gravity of a weighted averaging for obtaining second samples (2, 4) of the pairs of adjacent samples on the output lines of even fields are located at 3/4 of the second even input lines (L2e) and at 1/4 of third even input lines (L3e), so that a correct interlace on display on a receiver suitable for picture signals of the lower number of lines is obtained.

FIG.2A

FIG.2B

FIG.2C

**Method of and arrangement for reducing the number of lines of a picture signal, as well as an arrangement for increasing the number of lines of a picture signal.**

The invention relates to a method of obtaining from an input picture signal, assembled from input lines and having a first number of lines, an output picture signal which is assembled field-sequentially from output lines, and has a lower number of lines than the first number of lines, first samples or pairs of neighboring samples on the output lines of even and odd fields being obtained by means of weighted averaging of samples from at least first and second even and odd input lines, respectively, of the input picture signal.

The invention also relates to an arrangement for obtaining from an input picture signal, assembled from input lines, having a first number of lines, an output picture signal which is fieldsequentially assembled from output lines having a lower number of lines than the first number of lines, the arrangement comprising means for obtaining first samples of pairs of neighboring samples on the output lines of even and odd fields by means of weighted averaging of samples from at least first and second even and odd input lines, respectively, of the input picture signal.

The invention further relates to an arrangement for obtaining from an input picture signal, assembled field sequentially with input lines having a first number of lines, an output signal assembled from output lines having a higher number of lines than the first number of lines.

Such a method and such arrangements are disclosed in the European Patent Application EP-A 0,114,693. Therein, in a transmitter of a high-definition television system a pair of differently weighted averages of two samples located one below the other of two consecutive lines, are placed next to each other on a line to be transmitted in a field of a high definition television picture to obtain a television signal having a number of lines equal to the number of lines of a normal definition television signal. The television signal thus obtained can be displayed without great problems on a normal definition receiver, such as, for example, a MAC receiver, and is therefore denoted a compatable television signal. A display having a normal definition is then obtained. The transmitted television signal can also be displayed on a high definition receiver, after having been decoded, wherein a reproduction having a high definition can be obtained in the absence of motion. The picture signals of the lines of the odd fields on the one hand and the even field of the transmitted television signal on the other hand are not located exactly halfway between each other, so that when this television signal is displayed on the normal definition receiver, pairing of lines seems to occur.

A first object of the invention is to provide, inter alia a method of and an arrangement for reducing the number of lines of a picture signal, wherein this disadvantage does not occur. The invention has for its further object to provide an adapted arrangement for increasing the number of lines of a picture signal.

According to the invention, a method of reducing the number of lines of a picture signal of the type mentioned in the opening paragraph, is characterized in that second samples of the pairs of neighboring samples on the output lines of odd and even fields are obtained by means of weighted averaging of samples from at least second and third odd and even input lines, respectively, centres of gravity of the weighted averaging for obtaining the first samples on the output lines of odd fields being located at 1/4 of the first odd input lines and at 3/4 of the second odd input lines, centres of gravity of the weighted averaging for obtaining the second samples on the output lines of the odd fields being located at 1/4 of the second odd input lines and at 3/4 of the third odd input lines, centres of gravity of the weighted averaging for obtaining the first samples of the output lines of even fields being located at 3/4 of the first even input lines and at 1/4 of the second even input lines, and centres of gravity of the weighted averaging for obtaining the second samples on the output lines of even fields being located at 3/4 of the second even input lines and at 1/4 of the third even input lines.

According to the invention, an arrangement for reducing the number of lines of a picture signal of the type defined in the opening paragraph is characterized, in that said means are further arranged for obtaining second samples of the pairs of neighboring samples on the output lines of odd and even fields by means of weighted averaging of samples from at least the second and third odd and even input lines, respectively, centres of gravity of the weighted averaging for obtaining the first samples on the output lines of odd fields being located at 1/4 of the first odd input lines and at 3/4 of the second odd input lines, centres of gravity of the weighted averaging for obtaining the second samples on the output lines of odd fields being located at 1/4 of the second odd input lines and at 3/4 of the third odd input lines, centres of gravity of the weighted averaging for obtaining the first samples on the output lines of even fields being located at 3/4 of the first even input lines and at 1/4 of the second input lines, and centres of gravity of the weighted averaging for obtaining the second samples on the output lines of even fields being located at 3/4 of the second even input lines and at 1/4 of the third even input lines.

According to the invention, an arrangement for increasing the number of lines of the picture signal of the type mentioned in the opening paragraph, is characterized in that, it includes a vertical filter circuit for obtaining output lines by means of weighted averaging of consecutive input lines, centres of gravity of the weighted averaging being located in odd and even fields at 3/4 of input lines positioned above and below the output lines, respectively, and at 1/4 of input lines positioned below and above the output lines, respectively.

The invention will now be described in greater detail by way of non-limitative example with reference to the accompanying drawings, wherein

- Fig. 1A shows an arrangement for reducing the number of lines according to the invention,
- Fig. 1B shows a coefficients table for the arrangement for reducing the number of lines as shown in Fig. 1A,
- Figs. 2A, 2B and 2C illustrate line number reduction according to the invention,
- Fig. 3A shows an arrangement for increasing the number of lines according to the invention,
- Fig. 3B shows a coefficients Table for the arrangement for increasing the number of lines shown in Fig. 3A, and
- Figs. 4A, 4B, 4C illustrate an increase in the number of lines according to the invention.

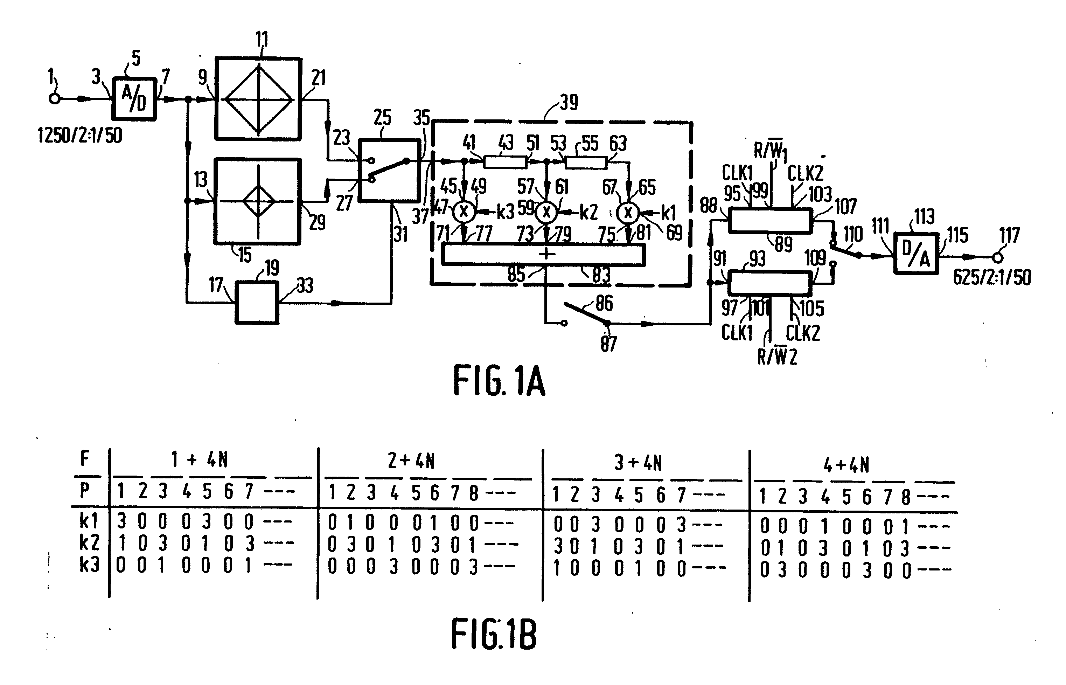

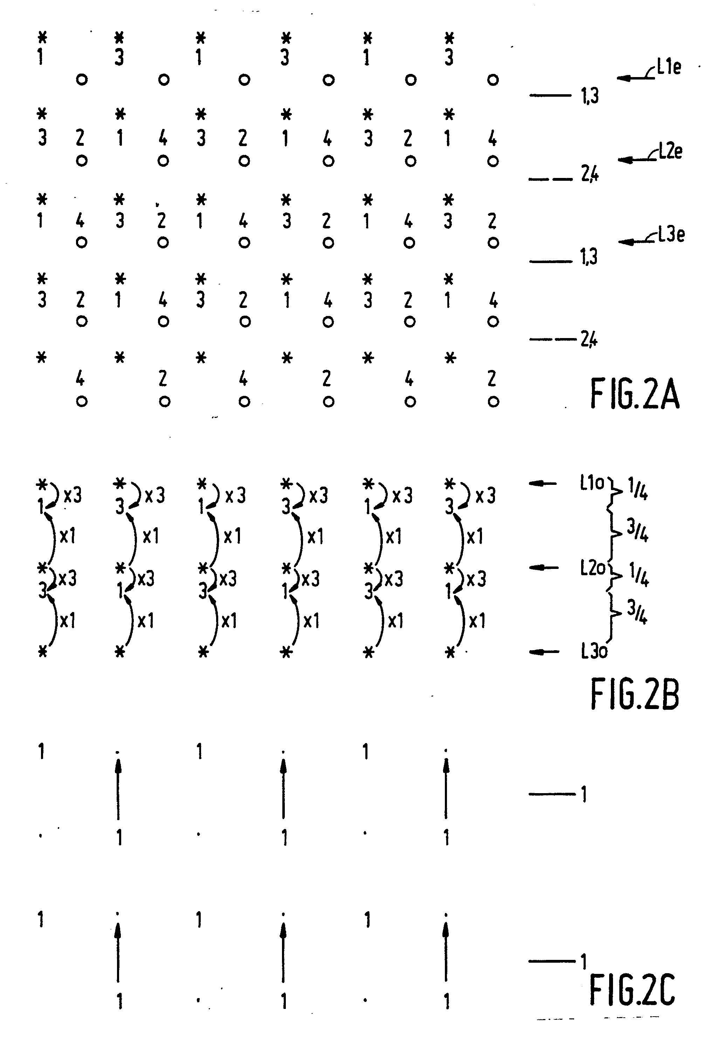

In Fig. 1A an arrangement is shown for reducing the number of lines in accordance with the invention, applied in a high-definition television transmitter. It is alternatively possible to apply the circuit for reducing the number of lines in a storage device storing a high definition television signal having a large number of lines, either interlaced or non-interlaced, as a compatible television signal having a smaller number of lines, i.e. displayable on a normal definition receiver. A high definition television picture signal having, for example, 1250 lines per picture, divided with interlace into 2 fields, is applied to an input 1 of the transmitter, whereby 50 fields per second are transmitted. This is indicated by 1250/2:1/50 in the Figure. The input 1 of the transmitter is connected to an input 3 of an analog-to-digital converter 5. An output 7 of the analog-to-digital converter 5 is connected to an input 9 of a spatial low-pass filter 11 having a large passband, suitable for still pictures, to an input 13 of a spatial low-pass filter 15 having a small passband, suitable for moving pictures, and to an input 17 of a motion detector 19. An output 21 of the spatial low-pass filter 11 is connected to a first change-over switch 25, a second input 27 of which is connected to an output 29 of the spatial low-pass filter 15. A control input 31 of the switch 25 is connected to an output 33 of the motion detector 19. A mixer circuit driven by the motion detector 19 may optionally be used instead of the switch 25. An output 35 of the switch 25 is connected to an input 37 of a vertical filter circuit 39. The action of the vertical filter circuit 39 will be explained in greater detail hereinafter with reference to the Figs. 2A, 2B and 2C. The input 37 of the vertical filter circuit 39 is connected to an input 41 of a line memory 43 and to a first input 45 of a multiplier 47, a coefficient k3 being applied to a second input 49 thereof. An output 51 of the line memory 43 is connected to an input 53 of a line memory 55 and to a first input 57 of a multiplier 59, a coefficient k2 being applied to a second input 61 thereof. An output 63 of the line memory 55 is connected to a first input 65 of a multiplier 67, a coefficient k1 being applied to a second input 69 thereof. Outputs 71, 73 and 75 of the multipliers 47, 49 and 67, respectively, are connected to respective inputs 77, 79 and 81 of an adder 83.

Fig. 1B shows values of factors formed by the coefficients k1, k2 and k3, for consecutive groups of three picture elements P on groups of three consecutive lines, for four subsequent fields F, equal to $1+4N$, $2+4N$, $3+4N$ and $4+4N$, wherein N is an integer. The factors are (3, 1, 0) / (0, 3, 1) for odd fields and (1, 3, 0)/(0, 1, 3) for even fields. Zero-columns indicate that of each line of the high definition picture signal samples are alternately transmitted and not transmitted, the locations of the zero-columns indicating that for each field to be transmitted samples are being used which are obtained by means of sampling with a phase shifted through 180° from field to field.

An output of the vertical filter circuit 39 of Fig. 1A is constituted by an output 85 of the adder 83. The output 85 of the adder 83 is connected to a sampling-frequency halving circuit which operates with a phase which is shifted through 180° from field to field, and which sampling-frequency halving circuit is simply shown in the Figure as a switch 86 which does not allow samples obtained by multiplication by the zero-columns to pass through and allows other samples to pass. The switch 86 may alternatively be placed at the input 37 of the vertical filter circuit 39 instead of at the output, so that the vertical filter circuit 39 only needs to operate at half the speed. The zero-columns in Fig. 1B must then of course be omitted. An output 87 of the switch 86 is connected to an input 88 of a line memory 89 and to an input 91 of a line memory 93. Each of these lines memories 89 and 93 is provided with a first clock signal input 95 and 97, respectively, for applying thereto a first clock signal CLK1. The line memories 89 and 93 further have read/write signal inputs 99 and 101, respectively, for applying thereto a first read/write signal R/ $\overline{W}$ 1 and a second read/write signal R/ $\overline{W}$ 2, respectively, the second read/write signal R/ $\overline{W}$ 2 being in anti-phase with the first read/write signal R/ $\overline{W}$ 1. The line memories 89 and 93 also have second signal clock inputs 103 and 105, respectively, for applying thereto a second clock signal CLK2. As the first read/write signal R/ $\overline{W}$ 1 and the second read/write signal R/ $\overline{W}$ 2 have opposite phases, one line memory line 89 or 93 is alternately being written, while the other line memory 93 or 89, respectively, is being read. The line period of the lines of the television signal is doubled, because the frequency of the clock signal CLK1 with which the line memories 89 and 93 are being written is twice as high as the frequency of the clock signal CLK2, with which the line memories are being read. This is necessary as the line period of the lines of the high definition 1250/2:1/50 picture signal is twice shorter than the line period of the lines of the compatible 625/2:1/50 picture signal which is conveyed to a channel not shown. Via a change-over switch 110, outputs 107 and 109 of the respective line memories 89 and 93 are connected to an input 111 of a digital-to-analog (D/A) converter 113, an output 115 of which is connected to an output 117 of the transmitter. The switch 110 may be omitted if the outputs 107 and 109 of the line memories 89 and 93, respectively are structured such, for example with enabling circuits, that they can simply be interconnected.

In the example of Fig. 1A, the arrangement for reducing the number of lines according to the invention is formed by the circuit elements arranged between the change-over switch 25 and the D/A converter 113.

In the Figs. 2A, 2B and 2C, it is shown how first, second, third and fourth consecutive fields to be transmitted, samples of which are indicated by a 1, a 2, a 3, a 4, respectively, are obtained from consecutive odd and even high definition fields, samples of which are indicated by an * and a 0 respectively. The samples of each first field to be transmitted, indicated by a 1, are obtained each time by establishing a weighted average from a superjacent sample indicated by an *, which is given a weight 3, and from a subjacent sample indicated by an *, which is given a weight 1. How this weighted average is determined is described in greater detail in Fig. 2B.

The samples of each second field to be transmitted, indicated by a 2, are obtained each time by establishing a weighted average from a superjacent sample, indicated by a 0, which is given a weight 1 and from a subjacent sample indicated by a 0, which is given a weight 3.

The samples of each third field to be transmitted, denoted by a 3 are obtained by establishing each time a weighted average from a superjacent sample, indicated by an *, which is given a weight 3, and from a subjacent sample, indicated by an *, which is given a weight 1. How this weighted average is determined is also described in greater detail in Fig. 2B.

The samples of each fourth field to be transmitted, indicated by a 4, are finally obtained by establishing each time a weighted average from a superjacent sample, indicated by a 0, which is given a weight 1, and a subjacent sample, indicated by a 0, which is given a weight 3.

The number of consecutive high-definition fields, used to obtain the four fields to be transmitted, may be either 2 or 4. If two fields are used only the first of every two consecutive interlaced high definition pictures is used to obtain the four fields to be transmitted, and if four fields are used, each high definition field is used to obtain only one field to be transmitted. It is also possible to apply the arrangement for reducing the numbers of lines to non-interlaced input signals, through which a more accurate operation of the motion detector becomes possible.

The establishment of the weighted average of the first and the third odd fields to be transmitted, is explained in greater detail in Fig. 20. The coefficients or weighting factors of the input samples are indicated by x1 and x3. First, second, third odd high definition lines respectively, are indicated by L1o, L2o and L3o. 1/4 and 3/4 indicate how the centres of gravity of the weighted averages are located with respect to the input lines. First, second, third even high definition lines are indicated by L1e, L2e, L3e at the right hand side of Fig. 2A.

Fig. 2C shows how the samples of the first field to be transmitted, denoted by a 1, are interleaved to obtain pairs of neighboring samples on one line to be transmitted. The position of the centres of gravity of the line to be transmitted, thus created, is indicated by a horizontal line, bearing the number 1, at the right hand side of Fig. 2C.

The position of the centres of gravity of all four fields to be transmitted is indicated at the right hand side of Fig. 2A. The special manner of interleaving the weighted averages of the samples according to the invention, obtained in the manner as indicated, provides the advantage that the centres of gravity of the lines of the odd and even fields of the television signal to be transmitted are located in the vertical direction precisely between each other, so that a correct interlace is obtained during display of this signal on a normal definition receiver. The vertical filter circuit 39 of Fig. 1A effects this interleaving and the establishment of the weighted average in one step.

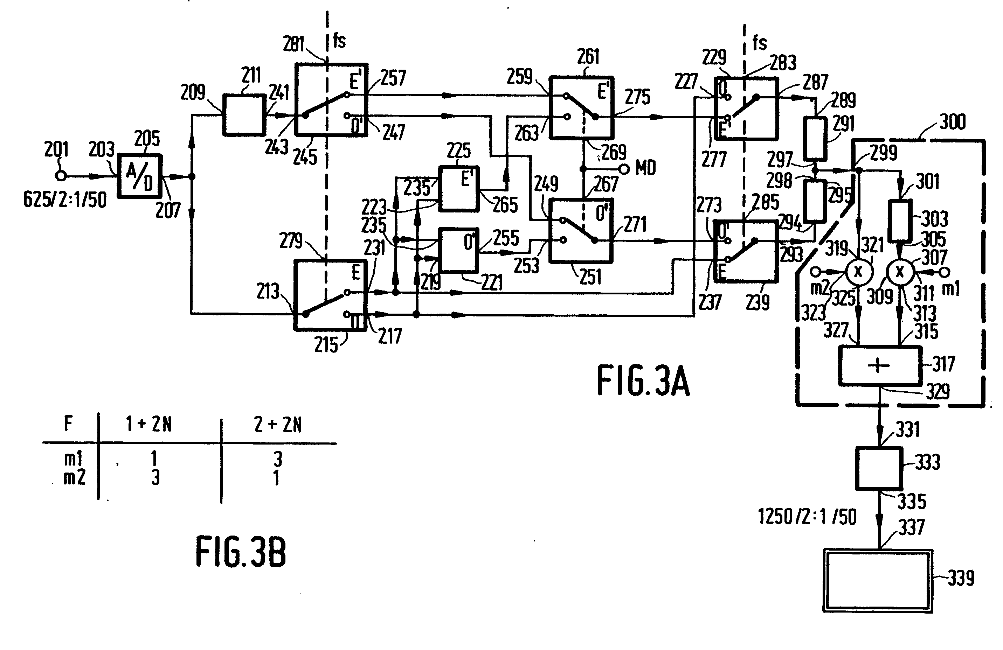

In Fig. 3A a 625/2:1/50 television picture signal which is, for example, obtained by the transmitter of Fig. 1A, from a high definition 1250/2:1/50 television picture signal, is applied to an input 201 of a high definition receiver provided with a circuit for increasing the number of lines according to the invention. The 625/2:1/50 picture signal can therefore have been transmitted via a 625/2:1/50 transmission channel, but also originate from a storage device, which has stored either a transmitted 625/2:1/50 picture signal or a high definition picture signal having 1250 lines, as a 625/2:1/50 picture signal by means of the circuit for reducing the number of lines according to the invention. The input 201 of the high definition receiver is connected to an input 203 of an analog-to-digital converter 205, an output 207 of which is connected to an input 209 of a picture memory 211, and to an input 213 of a change-over switch 215. An output 217 for odd samples 0 of the switch 215 is connected to a first input 219 of an interpolation filter 225 for odd samples $0'$, to a first input 223 of an interpolation filter 225 for even samples $E'$, and to an input 227 for odd samples 0 of a change-over switch 229. An output 231 for even samples E of the switch 215 is connected to a second input 233 of the interpolation filter 221 for odd samples $0'$, to a second input 235 of the interpolation filter 225 for even samples $E'$ and to an input 237 for even samples E of the switch 239. An output 241 of the picture store 211 is connected to an input 243 of a change-over switch 245. An output 247 for odd samples $0'$ of the switch 245 is connected to a first input 249 of a switch 251 for odd samples $0'$, of which a second input 253 is connected to an output 255 of the interpolation filter 221 for odd samples $0'$. An output 257 for even samples $E'$ of the switch 245 is connected to a first input 259 of a switch 261 for even samples $E'$, a second input 263 of the switch 261 being connected to an output 265 of the interpolation filter 225 for even samples $E'$. A motion detection signal MD is applied to a control input 267 of the switch 251 for odd samples $0'$ and to a control input 269 of the switch 261 for even samples $E'$. The motion detection signal MD may have been transmitted with the television signal or have been obtained in the high definition receiver by means of a motion detector (not shown). An output 271 of the switch 251 for odd samples $0'$ is connected to an input 273 for odd samples $0'$ of the switch 239. An output 275 of the switch 261 for even samples $E'$ is connected to an input 277 for even samples $E'$ of the switch 239. A signal of the frequency $f_s$ at which the television signal received is sampled, is supplied to control inputs 279, 281, 283 and 285 of the switches 215, 245, 229 and 239, respectively.

The portion of the high definition receiver described in the foregoing operates as follows. A picture signal whose consecutive picture elements (samples) of each line are interleaved according to Fig. 2C, is applied to the input 201 of the receiver. These samples are de-interleaved again by the switch 215, the odd samples 0 of one line of the picture signal received being placed on a first line of the picture signal to be displayed and the even samples E on a second line of the picture signal to be displayed. The switch 229 supplies the first line and the switch 239 supplies the second line. It will be clear that even samples $E'$ should be inserted again between the odd samples 0 of the first line and that odd samples $0'$ should be inserted between the even samples E of the second line. These even samples $E'$ and odd samples $0'$ are supplied by the switch 261 for the even samples $E'$ and by the switch 251 for the odd samples $0'$, respectively. When motion is present in the television signal, these switches opt for signals originating from the interpolation filters 221 and 225, respectively. When motion is absent, these switches opt for signals originating from a previous picture of the picture signal which are supplied by the picture store 211 via the switch 245, which separates again the even and the odd samples of a line received with a delay of one picture period. It will be clear that, if so desired, these samples delayed by one picture period could instead of be supplied by the picture memory 211 and the switch 245, also be supplied by two memories, each having a capacity of one field of the picture signal, when respective inputs of these field memories would be connected to the outputs 217 and 231, respectively, of the switch 215. A display having a high spatial resolution, may be achieved in the high definition receiver by the action of the switches 251 and 261, when motion is absent and a display, having a high temporal resolution, may be achieved thereby when motion is present. The switches 251 and 261 may alternatively be replaced by mixing circuits controlled by the motion detector signal MD, if so desired.

An output 287 of the switch 229 is connected to an input 289 of a compression circuit 291. An output 293 of the switch 239 is connected to an input 294 of a compression circuit 295. Such compression circuits are known per se and may be provided with line stores which may be read at a clock frequency which is twice as fast as the frequency with which they are written. Outputs 297 and 298 of the compression circuits 291 and 295, respectively, are connected to an input 299 of a vertical filter circuit 300. The input 299 of the vertical filter circuit 300 is connected to an input 301 of a line store 303, an output 305 of which is connected to a first input 307 of a first multiplier 309. The input 299 of the vertical filter circuit 300 is also connected to a first input 319 of a second multiplier 321. A coefficient m1 is applied to a second input 311 of the first multiplier 309, and a coefficient m2 is applied to a second input 323 of the second multiplier 321.

Values of these coefficients m1 and m2 are shown in Fig. 3B for consecutive fields F equal to 1 + 2N and 2 + 2N, in which N is an integer. The coefficients m1 and m2 together form factors (1, 3) and (3, 1) with which pairs of consecutive lines in odd and even received fields, respectively, are multiplied.

To revert to Fig. 3A, outputs 313 and 325 of the multipliers 309 and 321, respectively, are connected to respective inputs 315 and 327 of an adder 317. An output 329 of the adder 317, which at the same time constitutes an output of the vertical filter circuit is connected to an input 331 of an interpolation circuit 333, of which an output 335 is connected to an input 337 of a display arrangement 339. The interpolation circuit 333 obtains missing samples from and between samples, arranged to a quincunx sampling pattern, which are supplied by the vertical filter circuit 300 by means of interpolation and subsequently provides a digital-to-analog conversion. When there is no motion, an interpolation filter having a wider passband is used during this interpolation than when motion is present.

In the example of Fig. 3A, the circuit for increasing the number of lines according to the invention is formed by the circuit elements 291, 295 and 300.

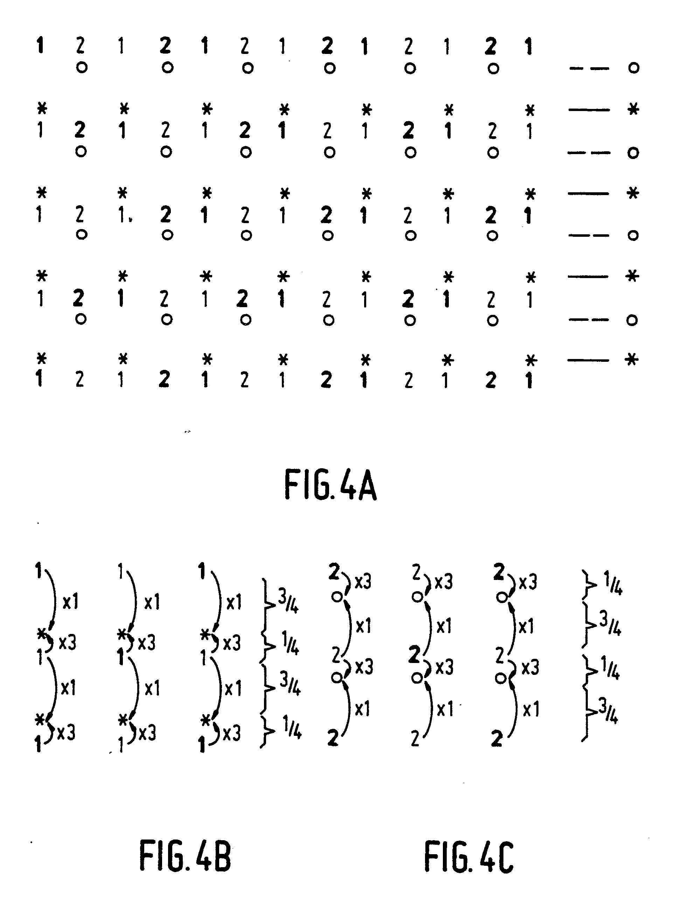

Figs. 4A, 4B and 4C show how first and second fields, samples of which are indicated by an * and a 0, respectively, to be displayed on a high definition receiver, are obtained from first and second received fields, samples of which are indicated by a bold 1 and a bold 2, respectively. However, the inverse of the operation as shown in Fig. 2C is first carried out: in each received field, the samples located on one line are pushed apart, so that two lines with staggered samples are obtained. The situation indicated by the bold 1's in Figs. 4A and 4B, then occurs for the first received field and the situation indicated by the bold 2's in Figs. 4A and 4B occurs for the second received field. The number of samples is subsequently doubled in each received field, so that thin 1's and 2's are obtained. Doubling the number of samples may be achieved mainly in two manners: doubling the number of samples will be achieved by means of spatial interpolation in the case of moving parts in the picture of the television signal, to avoid blurring, and doubling the number of samples will be achieved by means of filling-in the samples of the previous picture in the case of stationary parts in the picture of the television signal, to obtain a field suitable for a display with a high spatial resolution; with each first received field the samples of the previously received third field are used for that purpose and with each second received field the samples of the previously received fourth field are used therefor. It is alternatively possible to choose for a method wherein samples are inserted which are obtained, depending on the amount of motion, by weighted averaging of samples of the previous field, transmitted one picture earlier, and of samples obtained by spatial interpolation. Whichever method is used, a situation as indicated by the thin and bold 1's in the Figs. 4A and 4B ultimately occurs for each received first field and the situation as indicated by the thin and bold 2's in the Figs. 4A and 4C, occurs for each received second field.

As is shown in Fig. 4A, the samples indicated by the 1's and 2's are at the same height, so that a correct interlace during display on the display arrangement of the high definition receiver is not yet obtained. The procedure described in the following is performed to place the lines of, on the one hand, the odd and on the other hand the even fields, precisely between eachother also during display on the display arrangement of the high definition receiver.

As is shown in Fig. 4B, the samples of the first field to be displayed indicated by an *, are obtained each time by establishing a weighted average from a superjacent sample, indicated by a 1, which is given a weight 1, and a subjacent sample indicated by a 1, which is given a weight 3. The centres of gravity of the weighted average of the odd fields are located at 3/4 of the input lines located above the output lines and at 1/4 of the input lines located below the output lines, as is shown at the right hand side of the Figure.

As is shown in Fig. 4C, the samples of the second field to be displayed, indicated by a 0, are obtained by establishing each time a weighted average from a superjacent sample, indicated by a 2, which is given the weight 3, and a subjacent sample indicated by a 2, which is given the weight 1. The centres of gravity of the weighted average of even fields are at 3/4 of the input lines lying below the output lines and at 1/4 of the input lines located above the output lines, as is shown at the right hand side of the Figure.

As is shown at the right hand side of Fig. 4A, the lines of the odd and even fields are precisely placed between eachother, so that a correct interlace is achieved during display on the display arrangement 339 of the high definition receiver. In the foregoing, it was described how the first and second fields received are processed in the high definition receiver to form first and second fields to be displayed, having double the number of lines. Processing the third and fourth field received into a third and fourth field to be displayed is achieved in a similar manner. Each thin 1 or 2 as shown in Figs. 4A, 4B and 4C may be replaced by a bold 3 or 4, respectively, and each bold 1 or 2, as shown in Figs. 4A, 4B and 4C, may be replaced by a thin 3 or 4, respectively. The thin 3's and 4's may obtained in a similar manner by means of spatial interpolation and/or inserting samples of the first and second received fields, respectively, received in the preceding picture period. Third and fourth fields to be displayed, samples of which are in exactly the same place as the samples of the first and second fields to be displayed, respectively, indicated by an and a 0, respectively, are obtained by weighted averaging, whereby the same weight factors must be used for the third fields to be displayed as for the first fields to be displayed and the same weight factors must be used for the fourth fields to be displayed as for the second fields to be displayed.

The methods as described in the foregoing are the simplest methods of obtaining the desired position of the centres of gravity of the weighted averages. It will be obvious that other, more complex, weighted averaging operations are possible, it then also being possible to obtain a flatter frequency characteristic. The picture signals to be displayed on the high definition receiver which is preprocessed in the transmitter by the vertical (3, 1, 0) / (0, 3, 1) filtering (denoted also (3, 1) filtering in the sequel) or the vertical (1, 3, 0) / (0, 1, 3) filtering (denoted also (1, 3) filtering in the sequel), performed by the vertical filter circuit 39 of Fig. 1A and postprocessed in the receiver by means of the vertical (1, 3) or (1, 3) filtering, respectively, performed by the vertical filter circuit 300 of Fig. 3A, is consequently filtered over the overall parth from camera to picture display screen by the convolution product (3, 10, 3) of the two filtering operations, so that a dip has occurred in the frequency characteristic at half a sampling frequency with which the picture signal is sampled. This dip may be avoided by convoluting the filtering operation in the transmitter by means of, for example, a (-1, 3 1/3, -1) correction filtration, which causes an amplification of signals having frequencies around half a sampling frequency, with which the picture signal is sampled, so that a vertical (-3, 9, 1/3, -1) filtration is ultimately applied in the transmitter, instead of the (3, 1) filtration. The convolution product of all filtering operations performed in the transmitter and in the receiver is then a vertical (-1, 0, 9 1/9, 0, -1) filtration, which has a much flatter frequency characteristic for its result. If so desired, peaks occurring in the latter frequency characteristic at 1/4 and 3/4 of the sampling frequency may be further reduced by filtration with, for example a vertical (1, 0, 9 1/9, 0, 1) correction filtration. If this correction filtration is also applied at the transmitter end a preprocessing with a vertical (-3, 9, -27, 81, 1/27, -1/9, 1/3, -1) filtration is ultimately performed. The convolution product of all filtering operations applied in the transmitter and in the receiver is in that case a vertical (-1, 0, 0, 0, 81, 1/81, 0, 0, 0, -1) filtration which results in a very flat frequency characteristic. The centre of gravity of the weighted averaging obtained by means of this last-mentioned filtration is still always in the same position as in the said first simple (3, 1) filtration, as the correction filtrations used are neutral as regards the centre of gravity.

In principle, the correction filtering operation may also be carried out in the high definition receiver instead of in the transmitter. Generally it can be said that it is preferred to place circuits which can be positioned in both the transmitter and the high definition receiver, in the transmitter, to enable a high definition receiver which is as simple and consequently as cheap as possible. Furthermore, on the one hand placing an enhancing correction filter as the first-mentioned correction filter in the high definition receiver is disadvantageous, because the signal in the dip of the frequency characteristic has a relatively poor signal-to-noise ratio, but on the other hand placing this enhancing filter in the transmitter has the disadvantage that an interference pattern in the transmitted picture caused by interleaving samples originated from both sides of the transition becomes visible on a normal definition receiver to its full extent during a vertical transition in a picture of the picture signal. The latter consideration argues for placing the enhancing filter partly in the transmitter to obtain a sufficiently high signal-to-noise ratio on the one hand and to reduce the interference pattern to a certain degree on the other hand and the remaining part in the high definition receiver. It is also possible, in a sophisticated embodiment of the invention, to have the distribution of the enhancing correction filter over the transmitter and the high definition receiver depend on the detection of vertical transitions in the picture signal, so that the correction filtration is fully achieved in the transmitter during the absence of such a vertical transition and in the high definition receiver during the presence of the vertical transition, intermediate situations also being possible, depending on the hardness of the vertical transition.

It will be obvious from the foregoing that many types of filtering operations are possible within the scope of the invention, provided that the centres of gravity of the weighted averages thus obtained are at the correct locations.

**Claims**

1. A method of obtaining from an input picture signal, assembled from input lines and having a first number of lines, an output picture signal which is field-sequentially assembled from output lines and has a lower number of lines than the first number of lines, first samples of pairs of neighboring samples on the output lines of even and odd fields being obtained by means of weighted averaging of samples from at least first and second even and odd input lines, respectively, of the input picture signal,

characterized in that second samples of the pairs of neighboring samples on the output lines of odd and even are obtained by means of weighted averaging of samples from at least second and third odd and even input lines, respectively, centres of gravity of the weighted averaging for obtaining the first samples on the output lines of odd fields being located at 1/4 of the first odd input lines and at 3/4 of the second odd input lines, centres of gravity of the weighted averaging for obtaining the second samples of the output lines of the odd fields being located at 1/4 of the second odd input lines and at 3/4 of the third odd input lines, centres of gravity of the weighted averaging for obtaining the first samples of the output lines of even fields being located at 3/4 of the first even input lines and at 1/4 of the second even input lines, and centres of gravity of the weighted averaging for obtaining the second samples on the output lines of even fields being located at 3/4 of the second even input lines and at 1/4 of the third even input lines.

2. A method as claimed in Claim 1, characterized by a vertical filtering having a transfer function for odd and even fields including at least factors equal to (3, 1, 0) and (0, 3, 1), or (1, 3, 0) and (0, 1, 3), respectively.

3. A method as claimed in Claim 2, characterized in that the vertical filtering comprises a factor having a gain for signals having frequencies around half a sampling frequency with which the picture signal is sampled.

4. An arrangement for obtaining from an input picture signal assembled from input lines and having a first number of lines, an output picture signal which is field-sequentially assembled from output lines and has a lower number of lines than the first number of lines, the arrangement comprising means for obtaining first samples of pairs of neighboring samples on the output lines of even and odd fields by means of weighted averging samples from first and second even and odd input lines,respectively, of the input picture signal, characterized in that said means are further arranged for obtaining second samples of the pairs of neighboring samples on the output lines of odd and even fields by means of weighted averaging of samples from at least the second and third odd and even input lines, respectively, centres of gravity of the weighted averaging for obtaining the first samples on the output lines of odd fields being located at 1/4 of the first odd input lines and at 3/4 of the second odd input lines, centres of gravity of the weighted averaging for obtaining the second samples on the output lines of odd fields being located at 1/4 of the second odd input lines and at 3/4 of the third odd input lines, centres of gravity of the weighted averaging for obtaining the first samples on the output lines of even fields being located at 3/4 of the first input lines and at 1/4 of the second even input lines and centres of gravity of the weighted averaging for obtaining the second samples on the output lines of even fields being located at 3/4 of the second even input lines and at 1/4 of the third even input lines.

5. An arrangement as claimed in Claim 4, characterized in that said means include a vertical filter circuit having a transfer function for odd and even fields comprising at least factors equal to (3, 1, 0) and (0, 3, 1), or (1, 3, 0) and (0, 1, 3) respectively.

6. An arrangement as claimed in Claim 5, characterized in that the transfer function of the vertical filter circuit includes a factor having a gain for signals having frequencies around half a sampling frequency with which the picture signal is sampled.

7. An arrangement for obtaining from an input picture signal which is assembled field-sequentially and has a first number of lines, an output picture signal assembled from output lines and having a higher number of lines than the first number of lines, characterized by a vertical filter circuit for obtaining output lines by means of weighted averaging of consecutive input lines, centres of gravity of the weighted averaging in odd and even fields being located at 3/4 from input lines which are located above and below the output lines, respectively, and at 1/4 of input lines located below and above the output lines, respectively.

8. An arrangement as claimed in Claim 7, characterized in that a transfer function of the vertical filter circuit for odd and even fields includes at least a factor equal to (1, 3) and (3, 1), respectively.

FIG.1A

FIG.1B

FIG.2A

FIG.2B

FIG.2C

FIG.3A

FIG.3B

625/2:1/50

1250/2:1/50

| F | 1 + 2N | 2 + 2N |
|---|---|---|
| m1 | 1 | 3 |
| m2 | 3 | 1 |

**1** 2 1 **2** 1 2 1 **2** 1 2 1 **2** 1 — — o
   o      o      o      o      o      o

\*   \*   \*   \*   \*   \*   \*   —— \*
1 **2** 1 2 1 **2** **1** 2 1 **2** 1 2 **1**   —— o
   o      o      o      o      o      o

\*   \*   \*   \*   \*   \*   \*   —— \*
1 2 1. **2** **1** 2 1 **2** **1** 2 1 **2** **1**   —— o
   o      o      o      o      o      o

\*   \*   \*   \*   \*   \*   \*   —— \*
1 **2** 1 2 1 **2** **1** 2 1 **2** **1** 2 1   —— o
   o      o      o      o      o      o

\*   \*   \*   \*   \*   \*   \*   —— \*
**1** 2 1 **2** **1** 2 1 **2** **1** 2 1 **2** **1**

## FIG.4A

## FIG.4B         FIG.4C

EP 0 400 752 A1

**European Patent Office**

# EUROPEAN SEARCH REPORT

Application Number

EP 90 20 1366

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 114 693 (ROBERT BOSCH GmbH) <br> * Page 5, line 11 - page 7, line 3 * | 1,2,4,5 | H 04 N 7/01 |
| A | GB-A-2 139 448 (BBC) <br> * Page 1, line 50 - page 3, line 53 * | 1,2,4,5 | |
| A | SMPTE JOURNAL, vol. 92, no. 5, May 1983, pages 552-561, Scarsdale, New York, US; C.P. SANDBANK et al.: "High-definition television and compatibility with existing standards" <br> * Page 554, right-hand column, line 54 - page 556, right-hand column, line 7 * | 1,2,4,5 ,7 | |
| A | DE-A-3 341 298 (ROBERT BOSCH GmbH) | | |
| A | EP-A-0 288 772 (PIONEER ELECTRONIC CORP.) | | |
| A | EP-A-0 252 563 (N.V. PHILIPS' GLOEILAMPENFABRIEKEN) | | TECHNICAL FIELDS SEARCHED (Int. Cl.5) |
| A | GB-A-2 194 409 (BBC) | | H 04 N |

The present search report has been drawn up for all claims

| Place of search | Date of completion of the search | Examiner |
|---|---|---|
| THE HAGUE | 12-09-1990 | VERSCHELDEN J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)